# EUROPÄISCHE PATENTSCHRIFT

(11) **EP 2 616 318 B1**
(45) Veröffentlichungstag und Bekanntmachung des Hinweises auf die Patenterteilung: **22.11.2017**
(21) Anmeldenummer: 11738720.9
(22) Anmeldetag: 01.08.2011
(51) Int. Cl.: B63B 27/14

(54) **Schiff mit Gangway**
Ship with a gangway
Navire avec une passerelle d'embarquement

(30) Priorität: 16.09.2010 DE 102010040899
(43) Veröffentlichungstag der Anmeldung: 24.07.2013
(73) Patentinhaber: Wobben Properties GmbH, 26607 Aurich (DE)
(72) Erfinder: ROHDEN, Rolf, 26607 Aurich (DE)
(74) Vertreter: Eisenführ Speiser
(86) Internationale Anmeldenummer: PCT/EP2011/063193
(87) Internationale Veröffentlichungsnummer: WO 2012/034770

(56) Entgegenhaltungen:
- WO-A2-2006/133950
- DE-U1-202010 004 794
- GB-A- 1 027 763
- GB-A- 2 037 355
- US-B1- 7 228 582

## Beschreibung

Die vorliegende Erfindung betrifft ein Frachtschiff mit mindestens einem Magnus-Rotor, einer Außenwand und einer Gangway zum Betreten und Verlassen des Schiffs. Schiffe der eingangs genannten Art führen üblicherweise ständig eine Gangway zum Betreten und Verlassen des Schiffs mit sich. Insbesondere Schiffe zum Personentransport, wie beispielsweise Kreuzfahrtschiffe, werden häufig über Landgänge betreten, welche fest im Hafen angeordnet sind und einen beweglichen Abschnitt haben, welcher sich in Höhe und Weite zu einer Ausstiegsöffnung oder einem Schiffsdeck manövrieren lässt. Ein ähnliches Prinzip findet sich auch an Flughäfen. Im Gegensatz zu solchen Schiffen legen andere Schiffe, beispielsweise Frachtschiffe, häufig in Häfen an, die solche Vorrichtungen nicht bereithalten. In diesen Fällen kommen die am Schiff mitgeführten Landgänge zum Einsatz. Bekannte Landgänge sind üblicherweise auf dem Schiffsdeck befestigt und werden nach dem Anlegen seitlich ausgestellt und vom Schiff herabgelassen. Andere bekannte Schiffe weisen Landgänge auf, die in immer der gleichen Position am Schiff angeordnet sind, und nach dem Anlanden lediglich zum Kai abgesenkt werden.
Während der Fahrt des Schiffes besteht bei den bekannten Landgängen der Nachteil, dass sie durch ihre Anordnung die Betriebsabläufe an Bord des Schiffes stören oder durch Erhöhung des Luftwiderstands einen erhöhten Kraftstoffverbrauch des Schiffs verursachen. Dieses trifft insbesondere, aber nicht ausschließlich auf Schiffe mit einem oder mehreren Magnus-Rotoren zu, wie beispielsweise in WO 2006/133950 A2 offenbart.

Vor diesem Hintergrund lag der vorliegenden Erfindung die Aufgabe zu Grunde, ein Frachtschiff mit einem möglichst reduzierten Kraftstoffverbrauch anzugeben.

Diese Aufgabe wird durch ein Frachtschiff nach Anspruch 1 gelöst.
Die Erfindung löst die ihr zu Grunde liegende Aufgabe bei einem Schiff der eingangs genannten Art, indem die Gangway einen Boden mit einer unteren Fläche aufweist, welche in der Fahrtposition der Gangway stetig in die Fläche der Außenwand übergeht. Die Erfindung beruht auf der Erkenntnis, dass der Luftwiderstand des Schiffs umso weiter sinkt, je geringer die von der Gangway angebotene Wind-Angriffsfläche ist. Weiterhin beruht die Erfindung auf der Erkenntnis, dass die Gangway während der Fahrt in der Regel nicht betreten werden muss und auch sonst keine Funktion übernimmt. Dadurch, dass die Gangway in der Fahrtposition mit der unteren Fläche seines Bodens einen stetigen Übergang zur Außenwand schafft, ist der Luftwiderstand minimiert, was sich in einem reduzierten Kraftstoffaufwand bemerkbar macht.
Der stetige Übergang zwischen der unteren Fläche des Bodens der Gangway und der Außenwand des Schiffs ist bevorzugt knickfrei und besonders bevorzugt eben ausgebildet.
Die Erfindung wird dadurch vorteilhaft weitergebildet, dass die Gangway in der Fahrtposition innerhalb einer Ausnehmung in der Außenwand aufgenommen ist. Durch die Aufnahme der Gangway in der Ausnehmung lässt es sich erreichen, dass die Gangway in Fahrtposition vollständig verdeckt angeordnet ist.
Die untere Fläche der Gangway ist eine geschlossene Fläche und dazu ausgebildet, in Fahrtposition die Ausnehmung vollständig zu verschließen. Durch das vollständige Verschließen der Ausnehmung wird vorteilhaft erreicht, dass Luft im Wesentlichen laminar und ohne zusätzliche Wirbelbildung an der Ausnehmung vorbeiströmen kann. Dies wirkt sich weiter vorteilhaft auf den Luftwiderstand des Schiffs aus.

Die Gangway ist vorzugsweise um eine erste Achse von der Liegeposition in die Fahrtposition schwenkbar. Hierdurch wird erreicht, dass die Gangway in Fahrtposition im Wesentlichen parallel zur Außenwand, vorzugsweise vertikal angeordnet ist. Die Tiefe der Ausnehmung und der somit benötigte Platzbedarf für die Gangway ist auf diese Weise minimierbar. In einer alternativen Ausführung ist die Gangway auch parallel in die Ausnehmung hinein verschiebbar.

Vorzugsweise ist die Gangway um eine zweite Achse von der Liegeposition in eine abgesenkte Position schwenkbar. Das Absenken mittels Schwenkbewegung erfolgt vorzugsweise stufenlos, so dass die Höhendifferenz zwischen dem oberen Ende der Gangway und dem Kai unabhängig von der Höhe der Kaimauer und unabhängig vom Beladungszustand des Schiffs zuverlässig überbrückbar ist.

Die Gangway ist vorzugsweise in Liegeposition um eine dritte Achse seitlich schwenkbar. Die Schwenkbarkeit um eine vertikale dritte Achse gewährleistet die Möglichkeit, die Gangway in Liegeposition in abgesenktem oder nicht abgesenktem Zustand seitlich von der Außenwand des Schiffs fortzuschwenken, beispielsweise um sich ergebende Seitenabstände zwischen der Außenwand des Schiffs und der Kaimauer zu überbrücken.

Gemäß einer weiteren vorteilhaften Ausführungsform weist das Schiff mindestens einen Kran zum Schwenken der Gangway um die erste und/oder zweite und/oder eine dritte Achse auf, der zwischen einer Liegeposition und einer Fahrtposition hin- und herbewegbar ist. Der Kran ist vorzugsweise in Fahrtposition innerhalb einer Ausnehmung in der Außenwand des Schiffs angeordnet, welche zumindest teilweise mit der die Gangway aufnehmenden Ausnehmung übereinstimmt. Somit stellt auch der Kran in Fahrtposition keine zusätzliche Angriffsfläche für das Schiff umströmende Luft dar, sondern ist ebenfalls in Fahrtposition vorzugsweise vollständig verdeckt angeordnet.

Vorzugsweise ist somit die den Kran aufnehmende Ausnehmung in Fahrtposition vollständig von der unteren Fläche der Gangway verschlossen.

Gemäß einer weiteren vorteilhaften Weiterbildung ist der Kran um eine Achse von der Liegeposition in die Fahrtposition schwenkbar angeordnet, wobei die Gangway mittels des Schwenks des Krans zwischen der Liegeposition und der Fahrtposition hin- und herbewegbar ist. Die Achse, um die der Kran schwenkbar angeordnet ist, ist vorzugsweise parallel zu der ersten Achse der Gangway ausgerichtet. Besonders bevorzugt ist die Kran-Achse koaxial zu der ersten Achse der Gangway ausgerichtet.

Vorzugsweise weist der Kran eine Winde zum Einholen oder Auslassen eines Seils auf. Das Seil ist vorzugsweise mit der Gangway verbunden, um das Schwenken der Gangway um die zweite Achse der Gangway zu bewirken, wodurch die Gangway von der Liegeposition in eine abgesenkte Position geschwenkt wird oder aus dieser heraus angehoben wird.

Weiter vorzugsweise ist der Kran mit einem Auslegers versehen, welcher teleskopartig ausfahrbar ist. Der teleskopartig ausfahrbare Ausleger ist dazu eingerichtet, die Schwenkbewegung der Gangway um die dritte Achse der Gangway zu bewirken. Hierdurch wird der seitliche Abstand bzw. der seitliche Winkel der in Liegeposition befindlichen Gangway relativ zu der Außenwand des Schiffs verändert.

Gemäß einer weiteren bevorzugten Ausführungsform des erfindungsgemäßen Schiffs weist die Gangway links und/oder rechts ein Geländer auf, das in Fahrtposition innerhalb der Ausnehmung zur Aufnahme der Gangway angeordnet ist. Besonders bevorzugt wird das Geländer mittels eines Seilzugs oder einer gelenkigen Verbindung beim Bewegen der Gangway von der Fahrtposition in die Liegeposition aufgestellt. Das Geländer ist vorzugsweise klappbar und in Fahrtposition im Wesentlichen parallel zum Boden der Gangway angeordnet.

In einer weiteren alternativen Ausführungsform des erfindungsgemäßen Schiffs ist die Gangway teleskopartig ausgebildet. Der Boden der Gangway weist hierzu vorzugsweise eine Mehrzahl von Bodenelementen auf, die teleskopartig ineinander schiebbar angeordnet sind. Die Bodenelemente sind in Fahrtposition auf eine minimale Länge stauchbar und in Liegeposition auf eine größere als die minimale Länge ausfahrbar und im Wesentlichen parallel zueinander angeordnet. Alternativ dazu sind die verschiedenen Bodenelemente zueinander mittels Scharnieren klappbar angeordnet und lassen sich in Liegeposition wie eine Klappleiter auseinanderklappen. Der Vorteil einer teleskopartigen Ausführungsform wird darin gesehen, dass die räumliche Ausdehnung der Ausnehmung insbesondere in Längsrichtung der Gangway gemäß dieser Ausführungsform minimiert werden kann. Es wird als vorteilhaft angesehen, eine Ausnehmung möglichst geringen Volumens vorzusehen, um den Nutzraum an Bord des Schiffes optimal ausnutzen zu können. Das erfindungsgemäße Schiff weist mindestens einen Magnus-Rotor auf. Magnus-Rotoren werden auch als Flettner-Rotoren oder Segel-Rotoren bezeichnet.
Die Vorteile der erfindungsgemäß an dem Schiff ausgebildeten Gangway treten in verstärktem Maße bei einem Schiff mit mindestens einem Magnus-Rotor zutage. Der mindestens eine an dem Schiff vorgesehene Magnus-Rotor erzeugt in Abhängigkeit von der ihn umströmenden Luft eine Vortriebskraft, die zum Antrieb des Schiffes beiträgt und ihrerseits eine signifikante Kraftstoffersparnis mit sich bringt. Vorzugsweise ist der Magnus-Rotor als Zylinder asugebildet. Für einen optimierten Vortrieb des Magnus-Rotors ist es von wesentlicher Bedeutung, eine optimale Umströmung des Magnus-Rotors zu erreichen. Zu diesem Zweck ist das Schiff vorzugsweise oberhalb der Konstruktions-Wasserlinie aerodynamisch optimiert, um Nachlaufwirbel und andere Turbulenzen möglichst zu vermeiden. Dadurch, dass zusätzlich zu den konventionellen aerodynamischen Optimierungs-Maßnahmen wie beispielsweise glatten Flächen und weichen Kantenübergängen erfindungsgemäß auch die Gangway vorzugsweise vollständig in Fahrtposition verdeckt angeordnet ist und besonders bevorzugt auch der die Gangway steuernde Kran in Fahrtposition vollständig verdeckt ist, wird eine dem laminaren Strömungsfeld nahekommende Anströmung des Magnus-Rotors begünstigt. Hierdurch wird eine ideale Windausbeute ermöglicht, was wiederum zu einem maximal reduzierten Kraftstoffaufwand beiträgt.
Gemäß einer weiteren vorteilhaften Ausführungsform ist in einem Endabschnitt der Ausnehmung ein Durchgang zum Schiffsinneren oder zu einem Schiffsdeck vorgesehen. Der Durchgang, welcher vorzugsweise eine Tür aufweist, ist zusätzlich in Fahrtposition dann verschlossen, wenn die Ausnehmung ihrerseits von der unteren, geschlossenen Fläche der Gangway verschlossen ist. Weiter vorteilhaft ist die Ausnehmung mittels des Durchgangs betretbar, beispielsweise um Wartungs- und/oder Reinigungsarbeiten durchzuführen.
Die Gangway weist weiter vorzugsweise Treppenstufen auf. Die Treppenstufen sind bevorzugt parallelogrammartig ausgebildet. Die parallelogrammartige Ausbildung der Treppenstufen ist besonders vorteilhaft so eingerichtet, dass die Treppenstufen in Fahrtposition sowie in nicht abgesenktem Zustand der Gangway in Liegeposition eben nebeneinander angeordnet sind. Hierdurch wird der Platzbedarf für eine mit Treppenstufen ausgebildete Gangway minimiert.

Das Schiff weist vorzugsweise Sicherungselemente in Form von Rast-Haken oder Magneten auf, die zum Halten des Geländers und/oder der Gangway in Fahrtposition eingerichtet sind. Der sich hieraus ergebene Vorteil ist das Sichern des Geländers und/oder der Gangway gegen unbeabsichtigtes Lösen, was zu Geräuschentwicklung oder sogar Beschädigung führen kann.

Unter dem Begriff einer Außenwand wird im Rahmen der vorliegenden Erfindung derjenige Teil einer Bewandung des Schiffsrumpfs verstanden, welcher oberhalb der Konstruktions-Wasserlinie des Schiffs angeordnet ist, umfassend auch etwaige Seitenwände von Schüfsaufbauten.

Die Erfindung wird nachfolgend anhand bevorzugter Ausführungsformen und unter Bezugnahme auf die beigefügten Figuren näher erläutert. Hierbei zeigen:
- Figur 1: eine räumliche Ansicht eines Schiffs gemäß einem bevorzugten Ausführungsbeispiel;
- Figur 2: eine räumliche Darstellung einer erfindungsgemäßen Gangway, der an einem erfindungsgemäßen Schiff gemäß Figur 1 angeordnet ist;
- Figur 3: eine Querschnittsansicht eines Bereichs des Schiffs aus Figur 1 und der Gangway aus Figur 2;
- Figur 4: eine Seitenansicht einer erfindungsgemäßen Gangway an einem erfindungsgemäßen Schiff gemäß einer alternativen Ausführungsform;
- Figur 5: eine schematische räumliche Darstellung einer Gangway gemäß einer weiteren vorteilhaften Ausführungsform;
- Figur 6: eine Seitenansicht der Gangway aus Figur 5;
- Figur 7: eine schematische räumliche Darstellung einer Gangway gemäß einer weiteren bevorzugten Ausführungsform;
- Figur 8: eine räumliche Darstellung der Gangway aus Figur 7 in einem alternativen Betriebszustand; und
- Figur 9: eine Schnittansicht in Querrichtung durch das Schiff.

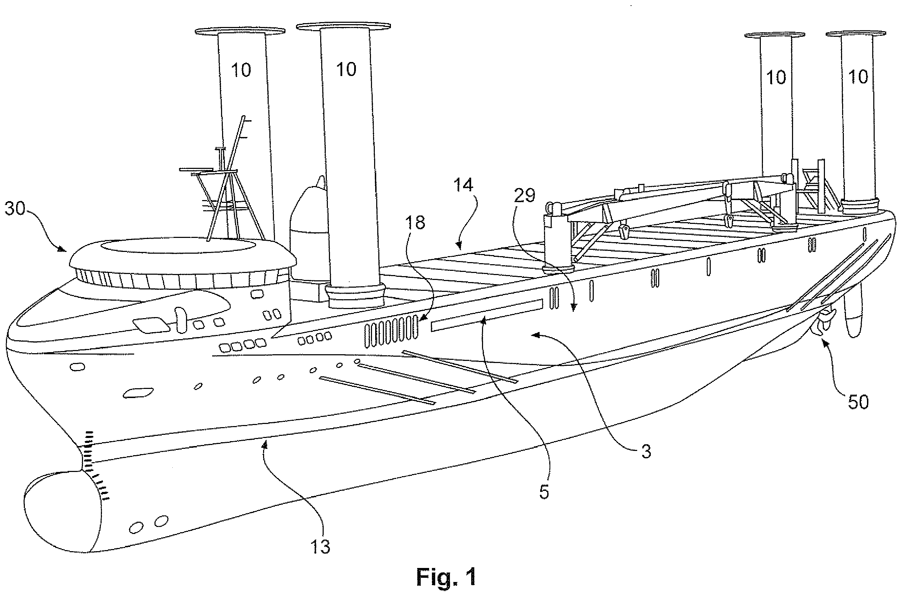

Figur 1 zeigt eine schematische Darstellung eines Schiffs gemäß einem ersten Ausführungsbeispiel. Das Schiff weist einen Rumpf bestehend aus einem Unterwasserbereich 16 und einem Überwasserbereich auf. Ferner weist das Schiff vier Magnus-Rotoren bzw. Flettner-Rotoren 10 auf, welche an den vier Ecken des Rumpfes angeordnet sind. Das Schiff weist eine im Vorschiff angeordnete Brücke 30 auf. Weiterhin weist das Schiff unter Wasser eine Schraube 50 auf. Für eine verbesserte Manövrierfähigkeit kann das Schiff ebenfalls Querstahlruder aufweisen, wobei vorzugsweise eines am Heck und eines bis zwei Querstrahlruder am Bug vorgesehen sind. Vorzugsweise sind diese Querstrahlruder elektrisch angetrieben. Die Brücke 30 sowie alle Aufbauten weisen oberhalb eines Wetterdecks 14 eine aerodynamische Formgebung auf, um den Luftwiderstand bzw. Windwiderstand zu reduzieren. Dies wird insbesondere dadurch erreicht, dass scharfe Kanten und scharfkantige Anbauteile im Wesentlichen vermieden werden. Um den Windwiderstand zu minimieren, werden möglichst wenige Aufbauten vorgesehen.

Das Schiff gemäß dem Ausführungsbeispiel aus Figur 1 stellt insbesondere ein Frachtschiff dar, das speziell für den Transport von Windenergieanlagen und deren Komponenten ausgelegt ist. Der Transport von Windenergieanlagen sowie deren entsprechenden Komponenten ist mit handelsüblichen Containerschiffen nur bedingt realisierbar, da die Komponenten einer Windenergieanlage einen entsprechenden Raumbedarf darstellen, welcher nicht den handelsüblichen Containermaßen entspricht, während die Massen einzelner Komponenten im Vergleich zu ihrem Raumbedarf gering sind. Beispielhaft seien hier Rotorblätter oder Gondelverkleidungen von Windenergieanlagen genannt, die überwiegend als voluminöse GFK-Strukturen mit wenigen Tonnen Gewicht ausgebildet sind.

Die vier Magnus-Rotoren 10 stellen hierbei windbetriebene Antriebe für das erfindungsgemäße Schiff dar. Es ist vorgesehen, das Schiff grundsätzlich mit den Magnus-Rotoren anzutreiben und den Propeller bzw. den Hauptantrieb nur zur Ergänzung bei nicht ausreichenden Windbedingungen zu verwenden.

Die vier Magnus-Rotoren 10 stellen hierbei windbetriebene Antriebe für das erfindungsgemäße Schiff dar. Es ist vorgesehen, das Schiff grundsätzlich mit den Magnus-Rotoren anzutreiben und den Propeller bzw. den Hauptantrieb nur zur Ergänzung bei nicht ausreichenden Windbedingungen zu verwenden.

Die Formgebung des Rumpfes des Schiffes ist derart ausgelegt, dass das Heck möglichst weit aus dem Wasser herausragt. Damit ist einerseits die Höhe des Hecks über dem Wasserspiegel, andererseits aber auch die Länge des Heckabschnittes gemeint, welcher ebenfalls über der Wasseroberfläche schwebt. Diese Ausgestaltung dient dazu, das Wasser frühzeitig vom Rumpf zu lösen, um eine hinter dem Schiff herlaufende Welle zu vermeiden, da diese zu einem hohen Widerstand des Rumpfes führt, weil auch diese vom Schiff hervorgerufene Welle durch die Maschinenleistung geschafft wird, welche dann aber nicht mehr zum Vortrieb zur Verfügung steht.

Der Bug des Schiffes ist über eine relativ lange Strecke scharf geschnitten. Das Unterwasserschiff ist bis zu einer Höhe von ca. 3 m über der Konstruktions-Wasserlinie 13 im Hinblick auf hydrodynamische Aspekte widerstandsoptimiert ausgestaltet.

Somit ist der Rumpf des Schiffes nicht auf eine maximale Tragfähigkeit, sondern auf einen minimalen Widerstand (aerodynamisch und hydrodynamisch) ausgelegt.

Die Aufbauten des Schiffes sind strömungsgünstig ausgestaltet. Dies wird insbesondere dadurch erreicht, dass alle Flächen als glatte Flächen ausgestaltet sind. Durch die Ausgestaltung der Brücke 30 sollen vor allen Dingen Nachlaufwirbel vermieden werden, so dass die Ansteuerung der Magnus-Rotoren möglichst ungestört erfolgen kann. Die Brücke wird vorzugsweise am Bug des Schiffes angeordnet. Eine Anordnung der Aufbauten in der Mitte des Schiffes ist ebenfalls möglich, würde aber die Beladung bzw. das Löschen der Ladung unnötig behindern, weil die Aufbauten damit genau über der Mitte des Laderaumes angeordnet wären.

Alternativ dazu kann die Brücke 30 am Heck des Schiffes angeordnet werden, dies würde sich jedoch dahingehend als nachteilig erweisen, dass die Magnus-Rotoren eine einwandfreie Sicht nach vorne beeinträchtigen würden.

Der Antrieb bzw. der Vortrieb des Schiffes ist für einen Windantrieb optimiert, so dass es sich bei dem Schiff der vorliegenden Erfindung um ein Segelschiff handelt.

Die Magnus-Rotoren werden vorzugsweise im Bereich der Eckpunkte der Laderäume angeordnet, so dass sie eine rechteckige Fläche aufspannen. Es sei jedoch darauf hingewiesen, dass ebenfalls eine andere Anordnung möglich ist. Die Anordnung der Magnus-Rotoren beruht auf einem Gedanken, dass eine bestimmte Rotorfläche erforderlich ist, um die gewünschte Antriebsleistung durch die Magnus-Rotoren zu erzielen. Durch eine Aufteilung dieser benötigten Oberfläche auf insgesamt vier Magnus-Rotoren werden die Abmessungen der einzelnen Magnus-Rotoren verringert. Durch diese Anordnung der Magnus-Rotoren bleibt eine größtmögliche durchgehende Fläche frei, welche insbesondere zum Be- und Entladen des Schiffes dient sowie eine Aufnahme einer Deckenlast in Form von mehreren Containerladungen ermöglicht.

Das Wetterdeck 14 weist Lichtöffnungen 18 auf, die zum Schutz vor Witterungseinflüssen bzw. Seewasser mit transparentem Material abgedeckt sein können. Die Form der Abdeckungen entspricht dabei derjenigen der übrigen Rumpfteile.

In einem seitlichen Bereich des Überwasserbereichs des Schiffsrumpfes, welcher einer Außenwand 29 zugeordnet ist, ist eine Ausnehmung 5 angeordnet. Die Ausnehmung 5 liegt in einem Gangway-Abschnitt. Die Ausnehmung 5 ist verschlossen, und eine Gangway ist in der Ausnehmung 5 vollständig aufgenommen.

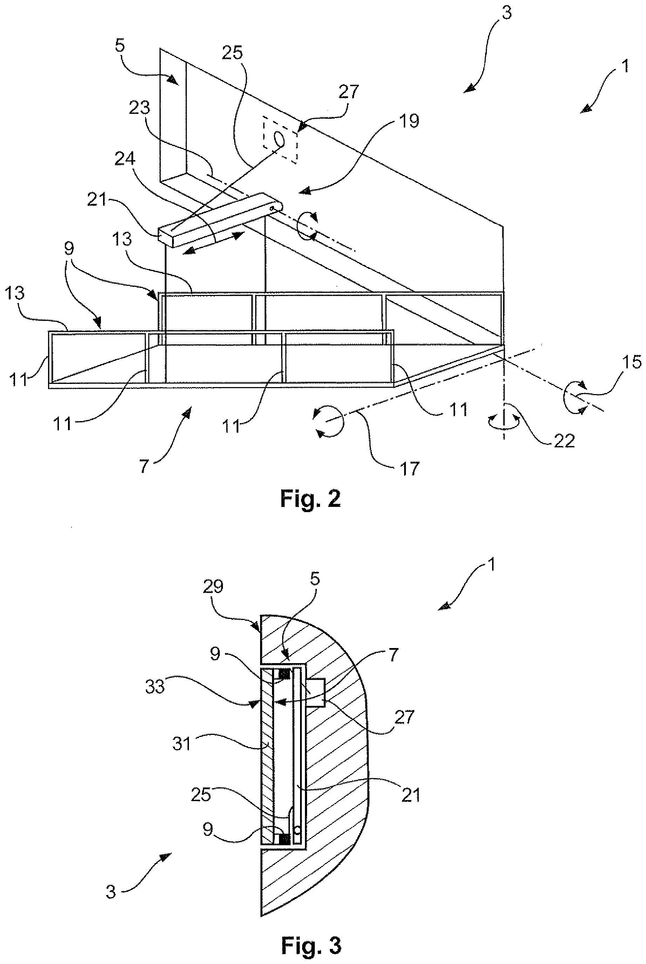

In Figur 2 ist die Ausnehmung 5 aus Figur 1 in geöffnetem Zustand dargestellt. In dem Gangway-Abschnitt 3 des Schiffs 1 ist eine Gangway 7 angeordnet. In der in Figur 2 gezeigten Stellung ist die Gangway 7 in Liegeposition und abgesenkt angeordnet. Die Gangway 7 weist links und rechts jeweils ein Geländer 9 auf. Das Geländer weist jeweils eine Mehrzahl von Streben 11 und jeweils einen Handlauf 13 auf.

In der gezeigten Ausrichtung ist die Gangway 7 um eine erste Achse 15 von einer Fahrtposition in die Liegeposition geschwenkt. Weiterhin ist die Gangway 7 um eine zweite Achse 17 geschwenkt, wodurch die Gangway 7 in eine abgesenkte Position versetzt ist. Innerhalb der Ausnehmung 5 ist weiterhin ein Kran 19 angeordnet, welcher gemäß Figur 2 in Liegeposition angeordnet ist und sich teilweise aus der Ausnehmung 5 heraus erstreckt. Der Kran 19 weist einen Ausleger 21 auf, welcher schwenkbar um eine Kran-Achse 23 angeordnet ist. Die Kran-Achse 23 ist gemäß Figur 2 parallel zu der ersten Achse 15 der Gangway ausgerichtet. Mittels des Auslegers 21 des Krans 19 wird ein Seil 25 geführt, welches die Gangway 7 mittels (nicht dargestellter) Umlenkmittel umschlingt. Das Seil 25 wird von einer symbolhaft dargestellten Seilwinde 27 ausgelenkt. Die Winde 27 ist vollständig innerhalb der Ausnehmung 5 angeordnet. Der Ausleger 21 des Krans 15 ist in Richtung des Pfeils 24 teleskopartig ausfahrbar. Die Gangway 7 ist um eine dritte Achse 22 schwenkbar. Die dritte Achse 22 ist vertikal ausgerichtet. Der Kran 19 ist dazu ausgebildet, mittels der Ausfahrbewegung des Auslegers 21 in Richtung des Pfeils 24 das Seil 25 translatorisch zu bewegen. In Folge der Translationsbewegung des Seils 25 ist die Gangway 7 zum Vollführen einer Schwenkbewegung um die dritte Achse 22 ausgebildet.

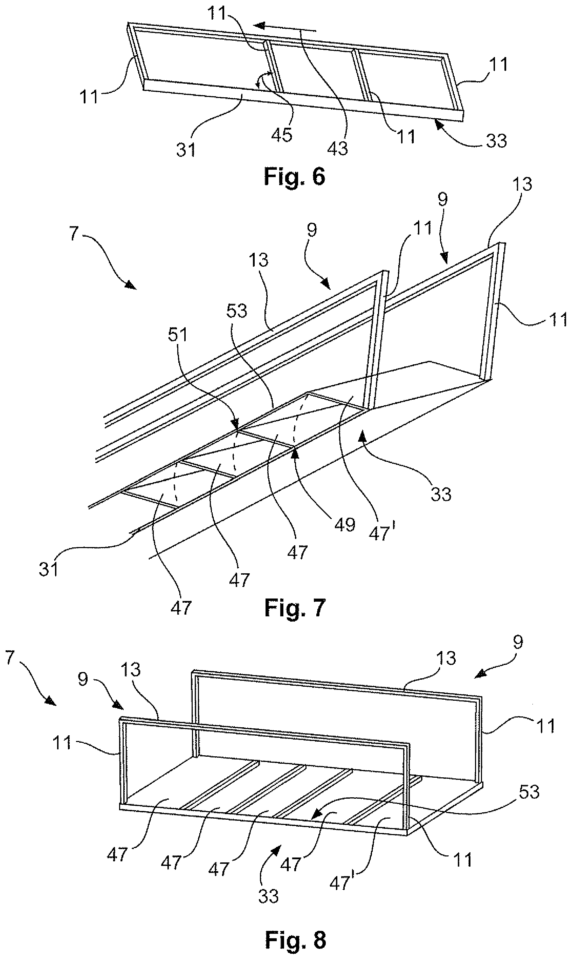

Eine Querschnittsansicht im Wesentlichen des Gangway-Abschnitts 3 des Schiffs 1 ist in Figur 3 dargestellt. In der Gangway-Abschnitt 3 des Schiffs 1 ist die Ausnehmung 5 in der Außenwand 9 vollständig von einem Boden 31 der Gangway 7 verschlossen. Die Gangway 7 weist an der Unterseite des Bodens 31 eine untere Fläche 33 auf, welche im Wesentlichen eben in die Außenwand 29 des Schiffs 1 übergeht. Der Übergang zwischen der unteren Fläche 33 des Bodens 31 und der Außenwand 29 ist zwar nicht vollkommen spaltfrei und somit nicht stetig im mathematischen Sinne, jedoch unter Beachtung im Schiffbau üblicher Fertigungstoleranzen knick- und stufenfrei ausgebildet. Im Inneren der Ausnehmung 5 ist die Gangway 7 somit vollständig aufgenommen. Die Gangway 7 befindet sich in einer vertikalen Ausrichtung und ist in Fahrtposition angeordnet. Das beidseitig jeweils angeordnete Geländer 9 ist in Fahrtposition zusammengefaltet. Alternative Möglichkeiten der Verstellung des Geländers 9 sind in den Figuren 6 und 7 dargestellt. Der Ausleger 21 des Krans 19 befindet sich in Figur 3 ebenfalls in vertikaler Ausrichtung und ist in Fahrtposition nach oben geschwenkt. Das Seil 25 ist mittels der Winde 27 entsprechend weit aufgerollt, um den Kran 19 sowie die Gangway 7 in Fahrtposition zu halten. Optionale zusätzliche Sicherungselemente sind in Figur 3 nicht dargestellt, können in der dargestellten Ausrichtung der Gangway 7 aber vorgesehen sein.

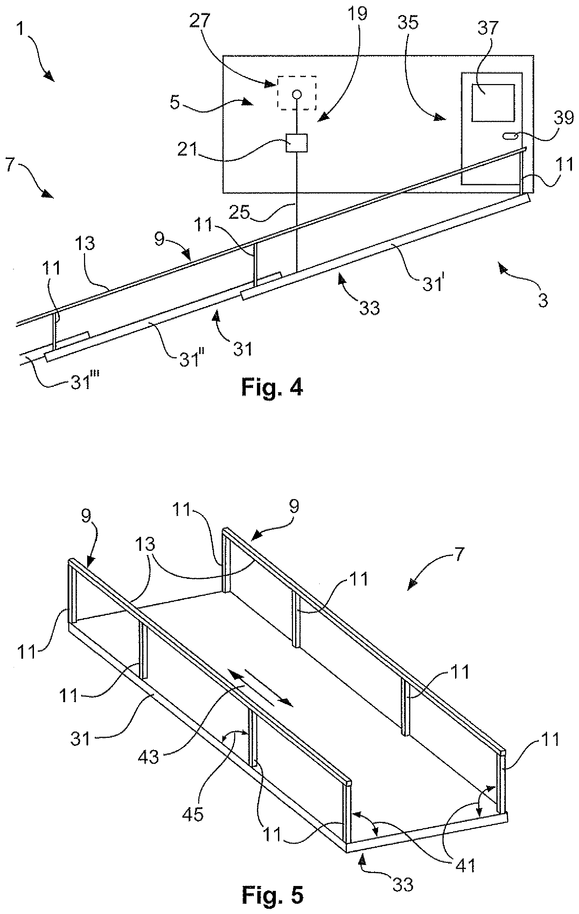

Eine weitere vorteilhafte Ausführungsform einer erfindungsgemäßen Gangway 7 an einem Schiff 1 ist in Figur 4 dargestellt. Die Gangway 7, welcher der Ausnehmung 5 des Schiffs 1 zugeordnet ist, ist in Liegeposition ausgeschwenkt und abgesenkt. Innerhalb der Ausnehmung 5 sind neben dem Ausleger 21 des Krans 19 noch die Winde 27 zum Einholen und Auslassen des Seils 25 angeordnet sowie eine Tür 35. Die Tür 35 weist ein Sichtfenster 37 und einen Türgriff 39 auf. Alternativ kann anstelle der Tür 35 auch ein Durchgang vorgesehen sein.

Die Gangway selbst weist einen Boden 31 auf, welcher aus mehreren teleskopartig ineinander gesteckten Bodenelementen 31', 31" und 31'" besteht. Die Bodenelemente 31', 31", 31"' sind in Längsrichtung der Gangway 7 relativ zueinander verschiebbar, optional mittels eines hydraulischen, pneumatischen oder elektrischen Antriebs. Jedem der Bodenelemente 31', 31", 31'" sind ein oder mehrere Stege 11 zugeordnet, auf welchen jeweils der Handlauf 13 auf einer Seite des Geländers gelagert ist. Der Handlauf 13 ist gemäß Figur 4 dazu ausgebildet, sich der Längenänderung der Gangway 7 durch Verschieben der Bodenelemente 31', 31", 31"' anzupassen. Beispielsweise kann der Handlauf 13 dazu als Seil ausgebildet sein. Alternativ kann der Handlauf auch aus mehreren einzelnen Segmenten bestehen, die dem jeweiligen Bodenelement 31', 31", 31"' zugeordnet sind.

Die Bodenelemente 31', 31", 31"' werden in maximal zusammengeschobenem Zustand zusammen mit den restlichen Elementen der Gangway 7 vollständig in der Ausnehmung 5 innerhalb der Außenwand 29 aufgenommen.

Alternative Möglichkeiten der Verstellbarkeit des Geländers 9 sind in den Figuren 5 und 6 dargestellt. In Figur 5 ist schematisch eine Gangway 7 mit beidseitig angeordnetem Geländer 9 dargestellt. Das Geländer 9 weist jeweils eine Mehrzahl schwenkbarer Stege 11 auf, die auf einer Seite jeweils mit einem Handlauf 13 verbunden sind. Dargestellt sind in Figur 5 beispielhaft zwei alternative Möglichkeiten, das Geländer schwenkbar zu bewegen. Gemäß einer ersten Möglichkeit ist das Geländer 9 in Richtung des Pfeils 41 nach innen schwenkbar zwischen einer im Wesentlichen lotrechten Stellung im Vergleich zum Boden 31 der Gangway 7 und einer im Wesentlichen parallelen Ausrichtung zum Boden 31 der Gangway 7 schwenkbar ausgebildet. Gemäß einer alternativen Ausführungsform ist das Geländer 9 durch Bewegen des Handlaufs 13 in Richtung des Pfeils 43 parallelogrammartig schwenkbar ausgebildet. Durch die parallelogrammartige Schwenkbewegung ändert sich der Winkel 45 zwischen den Streben 11 und dem Boden 31 (bzw. der unteren Fläche 33) der Gangway 7 von einer im Wesentlichen lotrechten Stellung der Streben 11 zu einer im Wesentlichen parallelen Ausrichtung der Streben 11, jeweils bezogen auf den Boden 31 der Gangway 7.

In Figur 6 ist eine vorstehend beschriebene parallelogrammartige Verstellung des Geländers 9 abgebildet.

Eine weitere bevorzugte Ausführungsform der erfindungsgemäßen Gangway 7 ist in den Figuren 7 und 8 dargestellt. Die in diesen Figuren dargestellte Gangway 7 weist eine Mehrzahl Treppenstufen 47 auf. Die Treppenstufen 47 sind relativ zu der unteren Fläche 33 bzw. zu dem Boden 31 der Gangway 7 parallel schwenkbar ausgebildet. Die Treppenstufen 47 sind in einem ersten Abschnitt 49 mit dem Boden 31 verbunden, und in einem zweiten Abschnitt 51 mittel eines Verbindungsglieds 53 untereinander verbunden.

Die in Figur 7 gezeigte Stellung der Gangway 7 entspricht der abgesenkten Liegeposition. Die oberste Treppenstufe 47' ist entweder mittels der verbundenen Streben 11 in Horizontallage fixiert, oder mittels eines (nicht dargestellten) zusätzlichen Halteelements. Auf Grund der Verbindung der Stufen 47 untereinander mittels des Verbindungsglieds 53 werden alle anderen Stufen ebenfalls in Horizontallage gehalten.

Wie sich aus dem Vergleich von Figuren 7 und 8 ergibt, können die Stufen 47 durch Anheben der Gangway 7 aus der abgesenkten Liegeposition in die Liegeposition in Decklage mit Boden 31 bzw. der unteren Fläche 33 des Bodens 31 gebracht werden. Hierdurch ist das Vorsehen von Stufen an der Gangway 7 in platzsparender Weise umsetzbar.

Alternativ ist es ebenso möglich, die einzelnen Stufen 47 jeweils mit einer Strebe 11 zu versehen, und die Horizontallage der Stufen 47 mittels eines starren Handlaufs 13, welcher die Streben 11 des Geländers 9 miteinander verbindet, zu gewährleisten. Dafür muss lediglich an einer Selle eine Vertikallage einer der Streben 11 sichergestellt werden, beispielsweise durch Halteelemente.

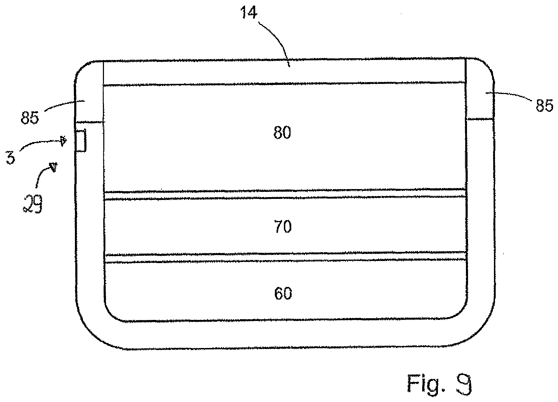

Fig. 9 zeigt eine Schnittansicht des Schiffs. Hierbei ist ein Unterraum 60 als unterster Laderaum angeordnet. Oberhalb des Unterraumes 60 ist ein erstes Zwischendeck 70 sowie ein zweites Zwischendeck 80 angeordnet. Das zweite Zwischendeck 80 wird durch das Wetterdeck 14 abgeschlossen. An den Seiten des Wetterdecks 14 ist ein Betriebsgang bzw. Hauptdeck 85 vorgesehen..

Der Lukensüll der Ladeluken sowie das Hauptdeck 85 werden auf der ganzen Länge mit einer Abdeckung versehen, so dass eine Fläche mit einer Oberfläche gebildet wird, welche an die Schiffsaußenhaut angepasst ist. Der Übergang ist vorzugsweise stetig, besonders bevorzugt knickfrei ausgebildet.

Durch die Ausgestaltung der Abdeckung des Hauptdecks 85 wird die Rumpfoberseite des Schiffes strömungsgünstig ausgestaltet, da keinerlei Aufbauten vorhanden sind, welche Verwirbelungen der Luftströmung hervorrufen könnten. Dies ist ebenfalls der Grund für die Abdeckung des Hauptdecks 85 bis zur Außenhaut des Schiffes, so dass sich ein strömungsgünstig verkleideter und wettergeschützter Gang auf dem Hauptdeck 85 ergibt.

Durch die Ausgestaltung des Wetterdecks bzw. der Abdeckung des Hauptdecks 85 wird abgesehen von der aerodynamisch günstigen Form auch das Hauptdeck 85 vor ungünstigen Wetterbedingungen geschützt.

Darüberhinaus verdeutlicht Figur 9 die Anordnung des Gangway-Abschnitts 3 an der Außenwand 29 des Schiffs 1. Sowohl der Gangway-Abschnitt 3 als auch die Abdeckung des Hauptdecks 85 gehen im Wesentlichen eben in die Außenwand des Schiffs über. Hierdurch ist gewährleistet, dass das Auftreten von Turbulenzen bei das Schiff zumindest teilweise seitlich anströmendem Wind minimiert wird. Bei einem bevorzugt mit einem oder mehreren Magnus-Rotoren ausgerüsteten Schiff wird die Luftströmung bestmöglich in Richtung der Rotoren geleitet.

## Patentansprüche

1. Frachtschiff mit mindestens einem Magnus-Rotor (10), einer Außenwand (29) und einer Gangway (7) zum Betreten und Verlassen des Schiffs, **dadurch gekennzeichnet, dass** die Gangway (7) einen Boden mit einer unteren Fläche (33) aufweist, welche in der Fahrtposition der Gangway (7) stetig in die Fläche der Außenwand (29) übergeht und in der Fahrtposition innerhalb einer Ausnehmung (5) in der Außenwand (29) aufgenommen ist, und
die untere Fläche (33) der Gangway (7) eine geschlossene Fläche ist, und dazu ausgebildet ist, in Fahrtposition die Ausnehmung (5) vollständig zu verschließen, so dass die Luft im Wesentlichen laminar und ohne zusätzliche Wirbelbildung an der Ausnehmung vorbeiströmen kann.

2. Schiff (1) nach Anspruch 1,
**dadurch gekennzeichnet, dass** die Gangway (7) um eine erste Achse (15) von der Liegeposition in die Fahrtposition schwenkbar ist, um eine zweite Achse (17) von der Liegeposition in eine abgesenkte Position schwenkbar ist, und vorzugsweise um eine dritte Achse (22) seitlich schwenkbar ist.

3. Schiff (1) nach einem der vorstehenden Ansprüche,
**gekennzeichnet durch** mindestens einen Kran (19) zum Schwenken der Gangway (7) um die erste Achse (15) und/oder zweite Achse (17) und/oder um die dritte Achse (22), der zwischen einer Liegeposition und einer Fahrtposition hin- und herbewegbar ist.

4. Schiff (1) nach Anspruch 3,
**dadurch gekennzeichnet, dass** der Kran (19) in Fahrtposition innerhalb einer Ausnehmung (5) in der Außenwand (29) des Schiffs angeordnet ist welche zumindest teilweise mit der die Gangway (7) aufnehmenden Ausnehmung (5) übereinstimmt.

5. Schiff (1) nach Anspruch 4,
**dadurch gekennzeichnet, dass** die den Kran (19) aufnehmende Ausnehmung (5) in Fahrtposition vollständig von der unteren Fläche (33) der Gangway (7) verschlossen ist.

6. Schiff (1) nach Anspruch 4 oder 5,
**dadurch gekennzeichnet, dass** der Kran (19) um eine Achse (23) von der Liegeposition in die Fahrtposition schwenkbar angeordnet ist, wobei die Gangway (7) mittels des Schwenkens des Krans (19) zwischen der Liegeposition und der Fahrtposition hin- und herbewegbar ist.

7. Schiff nach einem der Ansprüche 3 bis 6,
**dadurch gekennzeichnet, dass** der Kran (19) einen teleskopartig ausfahrbaren Ausleger (21) aufweist, der zum Schwenken der Gangway (7) um die dritte Achse (22) ausgebildet ist.

8. Schiff (1) nach einem der vorstehenden Ansprüche,
**dadurch gekennzeichnet, dass** die Gangway (7) links und/oder rechts ein Geländer (9) aufweist, das in Fahrtposition innerhalb der Ausnehmung (5) zur Aufnahme der Gangway (7) angeordnet ist.

9. Schiff nach einem der vorstehenden Ansprüche,
**dadurch gekennzeichnet, dass** das Geländer (9) vorzugsweise klappbar und in Fahrtposition im Wesentlichen parallel zum Boden (31) der Gangway (7) angeordnet ist.

10. Schiff (1) nach einem der vorstehenden Ansprüche, **dadurch gekennzeichnet, dass** die Gangway (7) teleskopartig ausgebildet ist und mehrere Bodenelemente (31',31",31"') aufweist, die den Boden (31) der Gangway (7) bilden.

## Claims

1. A cargo ship comprising at least one Magnus rotor (10), an outside wall (29) and a gangway (7) for going on to and leaving the ship (1), **characterised in that** the gangway (7) has a floor having a lower surface (33) which in the travel position of the gangway (7) goes continuously into the surface of the outside wall (29) and in the travel position is accommodated within a recess (5) in the outside wall (29), and the lower surface (33) of the gangway (7) is a closed surface and is adapted to completely close the recess (5) in the travel position, so that the air can flow substantially laminarly and without additional eddy formation past the recess.

2. A ship (1) according to claim 1 **characterised in that** the gangway (7) is pivotable about a first axis (15) from the lying position into the travel position and is pivotable about a second axis (17) from the lying position into a lowered position and is preferably pivotable laterally about a third axis (22).

3. A ship (1) according to one of the preceding claims **characterised by** at least one crane (19) for the pivotal movement of the gangway (7) about the first axis (15) and/or the second axis (17) and/or the third axis (22), which is reciprocatable between a lying position and a travel position.

4. A ship (1) according to claim 3 **characterised in that** the crane (19) is arranged in the travel position within a recess (5) in the outside wall (29) of the ship, which at least partially coincides with the recess (5) accommodating the gangway (7).

5. A ship (1) according to claim 4 **characterised in that** the recess (5) accommodating the crane (19) is completely closed in the travel position by the lower surface (33) of the gangway (7).

6. A ship (1) according to claim 4 or claim 5 **characterised in that** the crane (19) is arranged pivotably about an axis (23) from the lying position into the travel position, wherein the gangway (7) is reciprocatable between the lying position and the travel position by means of the pivotal movement of the crane (19).

7. A ship (1) according to one of claims 3 to 6 **characterised in that** the crane (19) has a telescopically extendable jib (21) adapted for the pivotal movement of the gangway (7) about the third axis (22).

8. A ship (1) according to one of the preceding claims **characterised in that** the gangway (7) has to the left and/or to the right a railing (9) which in the travel position is arranged within the recess (5) for accommodating the gangway (7).

9. A ship according to one of the preceding claims **characterised in that** the railing (9) is arranged preferably foldably and in the travel position is substantially parallel to the floor (31) of the gangway (7).

10. A ship (1) according to one of the preceding claims **characterised in that** the gangway (7) is telescopic and has a plurality of floor elements (31', 31", 31"') forming the floor (31) of the gangway (7).

## Revendications

1. Navire cargo avec au moins un rotor Magnus (10), une paroi extérieure (29) et une passerelle (7) pour entrer dans le navire et le quitter, **caractérisé en ce que** la passerelle (7) présente un sol avec une surface inférieure (33) qui, dans la position de déplacement de la passerelle (7), passe en permanence en la surface de la paroi extérieure (29) et est reçue, dans la position de déplacement, dans un évidement (5) dans la paroi extérieure (29), et
la surface inférieure (33) de la passerelle (7) est une surface fermée, et est réalisée afin de fermer complètement, dans la position de déplacement, l'évidement (5) de sorte que l'air puisse s'écouler de manière sensiblement laminaire et sans formation supplémentaire de tourbillon devant l'évidement.

2. Navire (1) selon la revendication 1,
**caractérisé en ce que** la passerelle (7) peut pivoter autour d'un premier axe (15) de la position à plat à la position de déplacement, peut pivoter autour d'un deuxième axe (17) de la position à plat à une position abaissée, et peut pivoter de préférence latéralement autour d'un troisième axe (22).

3. Navire (1) selon l'une des revendications précédentes,
**caractérisé par** au moins une grue (19) pour le pivotement de la passerelle (7) autour du premier axe (15) et/ou deuxième axe (17) et/ou autour du troisième axe (22) qui peut être déplacée alternativement entre une position à plat et une position de déplacement.

4. Navire (1) selon la revendication 3,
**caractérisé en ce que** la grue (19) est agencée, dans la position de déplacement, dans un évidement (5) dans la paroi extérieure (29) du navire qui concorde au moins partiellement avec l'évidement (5) recevant la passerelle (7).

5. Navire (1) selon la revendication 4,
**caractérisé en ce que** l'évidement (5) recevant la grue (19) est, dans la position de déplacement, complètement fermé par la surface inférieure (33) de la passerelle (7).

6. Navire (1) selon la revendication 4 ou 5,
**caractérisé en ce que** la grue (19) est agencée de manière pivotante autour d'un axe (23) de la position à plat à la position de déplacement, dans lequel la passerelle (7) peut se déplacer alternativement à l'aide du pivotement de la grue (19) entre la position à plat et la position de déplacement.

7. Navire selon l'une des revendications 3 à 6,
**caractérisé en ce que** la grue (19) présente une flèche (21) pouvant être sortie de manière télescopique qui est réalisée pour le pivotement de la passerelle (7) autour du troisième axe (22).

8. Navire (1) selon l'une des revendications précédentes, **caractérisé en ce que** la passerelle (7) présente, à gauche et/ou à droite, une balustrade (9) qui, dans la position de déplacement, est dieposée dans l'évidement (5) pour la réception de la passerelle (7).

9. Navire selon l'une des revendications précédentes, **caractérisé en ce que** la balustrade (9) est de préférence agencée de manière rabattable et, dans la position de déplacement, sensiblement parallèlement au sol (31) de la passerelle (7).

10. Navire (1) selon l'une des revendications précédentes, **caractérisé en ce que** la passerelle (7) est réalisée de manière télescopique et présente plusieurs éléments de sol (31', 31", 31'") qui forment le sol (31) de la passerelle (7).
